# EUROPEAN PATENT APPLICATION

(11) **EP 3 730 556 A1**
(43) Date of publication of application: **28.10.2020**
(21) Application number: 19171360.1
(22) Date of filing: 26.04.2019
(51) Int. Cl.: C09D 5/03, C09D 7/62, C09C 1/00

(54) **POWDER COATING COMPOSITION**

(71) Applicant: TIGER Coatings GmbH & Co. KG, 4600 Wels (AT)
(72) Inventor: HAIZINGER, Franziska, 4600 Wels (AT); LOIBL, Thomas, 4600 Wels (AT); LUTZ, Christian, 4600 Wels (AT)
(74) Representative: Sonn & Partner Patentanwälte

(57) **Abstract**

The present invention relates to a powder coating composition comprising at least one opaque basic powder coating B and at least one effect powder coating A comprising effect pigment particles, wherein the effect pigment particles present in the effect powder coating A are, at least partially, coated with a transparent curable powder coating matrix and wherein the effect powder coating A is ground so that less than 70 % by weight, preferably less than 60 % by weight, more preferably less than 50 % by weight, and most preferably less than 40 % by weight, of the effect powder coating A have a grain size of below 90 µm, as measured by sieve analysis.

## Description

According to the current state of the art, metallic powder coatings, which are also referred to as effect powder coatings, in particular RAL 9006, RAL 9007, DB coatings or iron mica coatings, are produced using the so-called bonding or dry blending method. In this method, the powder coating present in powder form is weighed with effect pigments and additives in the correct ratio and homogenized in a subsequent mixing process. In particular, effect basic powder coating based on resin, on polyester/Primid®, polyester/epoxy mixtures, on pure epoxy, or on polyurethane resins is used as a powder coating. In particular, pigments based on aluminum flakes, on natural or synthetic mica, or on glass can be used as an effect factor. According to the respective requirements, these pigments are single- or multi-coated, thereby rendering them resistant to weathering and/or chemicals. A non-exhaustive overview is given in the following:
- aluminum pigments
- mica pigments (pearlescent or interference pigments)
- metallic-effect pigments
- luminescent pigments
- stainless steel pigments
- gold bronze pigments
- copper pigments
- glass flakes
- hollow glass spheres

The mixing process can be performed as a simple mixing process in a mixer with low peripheral speed and short residence time, wherein binding agents, additives etc. and the metallic pigments particles are dry-blended. The disadvantage here is that such dry blends, among other factors due to the difference in specific weights and electrostatic charging behavior, result in a segregation of metallic pigment and binding agent during the powder coating process. Thus, the recyclability of such a powder coating comprising metallic pigments is no longer given for powder coatings produced according to this method.

Alternatively, in the so-called bonding method, a physical bonding of the metallic pigment particles to the powder coating particles can be achieved by heating a mixture of powder coating and metallic pigment until the glass transition temperature of the powder coating is achieved. The bonding method thus effects an adhesion of the metallic pigment particles to the surface of the powder coating particles by introducing energy, e. g. by means of external heat sources or high shearing forces, and a resulting heating of the powder coating to the glass transition point or higher.

EP 2 896 661 A1 relates to a powder coating composition in particulate and cured form comprising effect pigments as well as to a method for preparing a powder coating composition comprising effect pigments. In this method, a film-forming, homogeneous, thermoplastic coating mass is produced from the starting materials, in particular comprising binding agents, additives, coloring agents and/or bulking agents, by means of an extruder, and the resulting coating mass is ground after leaving the extruder, wherein the effect pigments are added in an end region of the extruder and dispersed in the viscous coating mass. The effect pigments are thereby wetted and coated with the film-forming coating mass, wherein at least 50 %, especially at least 75 %, and preferably at least 90 % of the surface of the effect pigment particles are wetted with the coating mass. The composition of the final powder coating composition is identical to the composition used for coating the effect pigment particles.

DE 10 2007 006 820 A1 relates to metallic-effect pigments having a homogeneous synthetic resin layer, wherein said synthetic resin coating comprises polyacrylate and/or polymethacrylate as well as organofunctional silane. The synthetic resin layer is applied onto the metallic-effect pigment particles by means of *in situ* polymerization to form a layer.

WO 2005/063897 A2 discloses chemically and mechanically resistant metallic-effect pigments coated with oligomeric and/or polymeric binding agents which can be cross-linked chemically and/or under the influence of, e. g., UV or IR radiation. In this manner, the metallic-effect pigments can be embedded in a polymeric film. After the coating of the metallic pigments, the binding agents are still curable or polymerizable, due to which said metallic pigments are used in powder coatings. During the coating process or the evaporation of the solvent, the binding agents can be slightly grafted, but they will not cure. The metallic pigment may be coated with the same binding agent system, in which it will be embedded and processed later on - for example in a powder coating. The metallic-effect pigments are produced by dispersing the metallic pigment particles in a solution or dispersion of an oligomeric and/or polymeric binding agent in an organic solvent and subsequent spraying or by spraying a solution or dispersion of an oligomeric and/or polymeric binding agent in an organic solvent onto metallic pigment particles being swirled a gas stream, followed by drying the metallic pigment particles that are coated with said binding agent in a moving gas stream.

The closest state-of-the-art is represented by our own EP 3 144 352, which discloses a powder coating composition comprising at least one base powder paint B and at least one effect powder coating A having effect pigments, wherein the effect pigments in the effect powder coating A are encased at least in part by a powder coating matrix which hardens transparently. Such powder coating comprises a combination of a milled premix, which has effect pigment particles dispersed in a melt of at least one transparent powder coating, and a powder coating, which forms the basis of the effect coating. Due to the fact that effect pigment particles are already encased by a transparent powder coating matrix when being mixed with the base powder coating, the shear forces acting on the effect pigment are at such a low level that most of the effect pigments will not be subjected to any substantial reduction in particle size. The document further discloses milling the effect powder coating A having effect pigments to a powder coating with a D50 smaller than 80 µm.

### Requirements for the invention:

Powder coatings providing a distinctive effect (a so-called sparkling effect), which is particularly pronounced in dark basic shades, are provided by the composition according to EP 3 144 352. Due to the high contrast between lighter, brilliant effect pigments and the dark basic color, the slightest differences in effect concentration are easily discernible, especially in the finished object, in particular when a plurality of coated components are mounted directly adjacent to one another and aligned end to end. In the case of larger components, undesirable clouds or bandings have often shown (due to locally increased pigment concentration) in prior art coatings. In addition, coatings performed on different coating systems or with different system settings and part geometries could sometimes yield different coating results and shade/effect formations. These variations in shade are not desirable and will most likely be complained about by contractors or architects, even though they merely represent an optical defect and do not impair the protective effect of the powder coating.

Moreover, the proportion of recycling powder is very important in effect powder coatings. During the coating process, the powder which does not adhere to the object will be suction-filtered and passed on to a cyclone. In said cyclone, the fine fraction is separated from the rest and suctioned off by means of rotation and gravity forces. The rest is then collected in a metering system and/or is recycled to the fresh powder in defined amounts and thus re-introduced into the coating process. With effect powder coatings prepared by the dry blending method there is a risk that the fine metallic-effect pigment particles will be separated and suctioned off through the cyclone. This is reflected in the so-called effect drift, which renders the shade of the effect powder coating less and less metallic over time. Thus, the proportion of powder to be recycled is very limited. In powders prepared by the bonding method, this effect drift is only slightly noticeable as the pigment is virtually "glued" to the powder granule by the process and will thus not be separated in the cyclone air stream. Nevertheless, it is common to use a proportion of not more than about 30 % of recycling powder during the application.

### Problem underlying the invention:

The problem underlying the present invention is the manufacture of unique and more brilliant effect powder coatings than already disclosed in the closest state-of-the-art, whose appearance or effect characteristics are only insignificantly influenced by gun type, equipment setting, proportion of recycling powder and part geometry. Additionally, it is desirable to reduce the pigment content of the coating composition as compared to the closest state-of-the-art compositions without altering the brilliant effects of the coating. Reduction of pigment load improves the ease of production and the cost efficiency of the coating composition. These absolutely process-safe and pronounced metallic effects should have an improved special depth effect and should be suitable for use in highly weather-resistant systems with its effects being improved over both effect powder coatings of the closest state-of-the-art and those of wet paints. Furthermore, the present invention relates to such a powder coating containing effect pigments prepared according to the present invention in a milled premix.

Such effect powder coatings are characterized by:
- high process stability with respect to a wide variety of application parameters
- pronounced metallic effects, in particular characterized by a strong depth effect, a brilliant effect and especially by featuring said effects irrespectively of the viewing angle. Moreover, substrates coated with the metallic powder coatings according to the present invention also show significantly less color variations within a defined area.
- recyclability of the powder coating, thus also reducing the proportion of waste to be discarded.

### Description of the invention:

The above-mentioned problem underlying the present invention is solved by providing a powder coating composition comprising at least one opaque basic powder coating B and at least one effect powder coating A comprising effect pigments, wherein the effect pigment particles present in the effect powder coating A are, at least partially, coated with a transparent curable powder coating matrix and wherein the effect powder coating A is ground so that less than 70 % by weight, preferably less than 60 % by weight, more preferably less than 50 % by weight, and most preferably less than 40 % by weight, of the effect powder coating A have a grain size of below 90 µm, as measured by sieve analysis. It has surprisingly been found that powder coatings having a substantial part, that is at least 30% by weight, of the effect powder coating A in a particle size of above 90 µm, show substantially enhanced brilliance when compared to the effect powder coatings according to EP 3 144 352. Specifically, this surprising effect resulted from the idea that by more coarse milling of effect powder coating A less damage would occur to the effect pigments mixed into the transparent powder coating matrix of effect powder coating A. Not only this was found to be true, but the more coarse particles of the effect powder coating A also provided for channeling light into deeper claims of the cured powder coating. Furthermore, such coarse particles and channels within the cured powder coating also statistically contained a higher number of single effect pigments per particle/channel, with a multitude of possible orientations to each other. Thus, light rays hitting the effect pigments in the cured powder coating are reflected in different angles and also in direction to other effect pigments within the very same channel, thus scattering and providing for a higher sparkle intensity.

The effect pigment particles are dispersed in a melt (or softened mass) of transparent and usually colorless effect powder coating, which effect powder coating can also be a transparent thermoplastic material. However, as a transparent and usually colorless powder coating, a powder coating composition is generally used which in most cases exclusively consists of resins/curing agents and required additives (e. g. for film degassing). If in the following reference is made to a "cured" or "curable" powder coating, this term is understood to comprise also thermoplastic powder coatings.

The cured powder coating film has a high transparency (translucency). According to the present invention, a transparent powder coating is preferably used which, in case of a layer thickness of 15 µm of the cured film, still has sufficient transparency to keep visible the underlying coating layers or substrates.

If in connection with the present invention the term "melt" or "melted" is used, it is understood to comprise as well a softening of the respective material up to a point where stirring further ingredients into the respective material is possible. Thus, complete melting of the respective material is sometimes not necessary to carry out the processes of present invention, it might be enough to soften the material up to a point were thorough mixing with other materials is possible. For the avoidance of doubt, it is noted that the term "melt" or "melted" should not be understood as the first-order phase transition of a single crystalline compound from the solid to the liquid state at a well-defined temperature according to the teachings of classical thermodynamics.

As is well known in the art, the occurrence of excessive shear stress in the dispersing (mixing or extruding) process of effect pigment particles comprised in a powder coating thus produced usually means that the effect pigment particles are damaged and are no longer capable of achieving the desired effect at all or only in a significantly reduced manner. There are a number of additional disadvantages, such as the aforementioned lack of recyclability. While the closest state-of-the-art already discloses that the introduction of effect pigment particles into molten, transparent powder coatings performed with low shearing forces allows for a very good dispersion/homogenization of the effect pigment particles in the polymer matrix of the transparent powder coating, while at the same time obtaining optical properties comparable to those obtained with effect pigments that are superficially bonded to powder coating granules by means of bonding or dry blending (dry mixing) processes, it has now surprisingly been found that there are further advantages when at least 30 % by weight, preferably at least 35 % by weight and more preferably at least 40 % by weight, of the effect powder coating A are ground to a grain size of more than 100 µm.

Preferably, at least 5 % by weight, preferably at least 7 % by weight, more preferably at least 10 % by weight, and most preferably at least 15 % by weight of the effect powder coating A are ground to a grain size of more than 125 µm.

According to a further preferred embodiment of the present invention, at least 3 % by weight of the effect powder coating A, preferably at least 5 % by weight are ground to a grain size of more than 212 µm.

In the powder coating according to the present invention, the shear forces acting on the effect pigment particles in effect powder coating A during production are kept so low that most of the effect pigment particles are not subjected to a substantial reduction in particle size. From a technical point of view, this can be achieved by melting or softening the transparent powder coating, for example in a heated stirred reactor, and stirring at least one effect pigment into or extruding the effect pigment with the melt/softened material, wherein the transparent effect powder coating A, which is obtained by cooling and subsequent coarse grinding and optionally sieving to a grain size as mentioned above, is then blended with an opaque, preferably colored basic powder coating B. Other technical embodiments are also conceivable within the scope of the present invention.

In a preferred embodiment, at least one effect pigment is added to a melt of transparent powder coating through at least one side feeder during an extrusion process, wherein the effect powder coating A, which is obtained from said powder coating melt by means of cooling and subsequent coarse grinding and optionally sieving to a grain size as mentioned above, is subsequently mixed with a basic powder coating B. The term "side feeder" implies the addition of a substance (according to the prior art usually an additive or effect pigment, see for example information material provided by the extruder manufacturer Leistritz Extrusionstechnik GmbH (Germany) "Master_V_07_GB/17.09.13 Masterbatch)) at a position in the extruder process section other than the initial section of the extruder (premix feeder in barrel 1). Through the side feeder, the effect pigment is forcibly conveyed laterally into the extruder and incorporated into the melt in a certain proportion to the transparent powder coating premix. Due to the arrangement of the side feeder along the process section and the implemented screw configuration it is possible to influence the shear force acting on the pigment particles in the extruder. A low shear force acting within the extruder results in a minimal damage to the effect pigment particles. The use of screw elements which only serve the purpose of mixing or conveying the extruder melt allows for a reduction of shear forces down to a level intended according to the present invention, while at the same time providing a sufficient homogenization/dispersion. Starting from the point of addition of the pigment, the shear force is kept as low as possible by means of special screw configurations, for example the exclusive use of conveying elements, in order to cause only minimal damage to (or destruction of) the one or more pigments.

As already mentioned, for the powder coating according to the present invention a transparent effect powder coating A can be prepared by adding at least one effect pigment through at least one side feeder into the melt of a subsequently transparently curing powder coating during an extrusion process and the coarse grinding and optionally sieving of the cooled melt to a grain size as mentioned above, wherein the effect powder coating A is then mixed with at least one further powder coating B, the so-called basic powder coating. The basic powder coating B can be a single-colored powder coating that contains no effect pigments or a powder coating that contains effect pigments and has been prepared by means of dry blending, bonding or extrusion.

As already mentioned above, the effect powder coating A can be prepared in an extruder by adding effect pigment to a transparent powder coating melt via a side feeder. Downstream from the point of addition through the side feeder, only low shear forces are exerted by the extruder shaft. Subsequently to the extrusion process, the effect powder coating is cold-rolled, crushed and coarse ground to grains having a grain size as mentioned above, optionally with an additional sieving step. The powder coating according to the present invention can then be produced by preparing and weighing raw materials, including the transparent effect powder coating A and the basic powder coating B, followed by mixing the two powder coatings. The powder coating according to the present invention can then be additionally refined with effect pigment in a further process step, which can in particular be performed by means of a bonding method.

In a preferred embodiment of the present invention, the powder coating according to the present invention comprises the coarse ground grains of effect powder coating A having a grain size as mentioned above in admixture with the basic powder coating B in a mass ratio of 1 to 50 % of effect powder coating A and 50 to 99 % of basic powder coating B, particularly preferably 5 to 30 % of effect powder coating A and 70 to 95 % of basic powder coating B. The powder coating according to the present invention can be prepared by means of a so-called dry blending or bonding method. Within the scope of the present invention, it is also possible to mix the coarse ground effect powder coating A having a grain size as mentioned above with the basic powder coating B during the melt phase.

In a typical embodiment of the prevent invention, basic powder coating B is milled and optionally sieved to obtain a distribution d₅₀ of below 80 µm, preferably below 60 µm and even more preferably below 45 µm. In an especially preferred embodiment, the distribution d₅₀ of the basic powder coating B is 36 µm.

Within the scope of the present invention, basically any extruder type available on the market, such as a single- or multi-screw extruder, can be used, provided it has a side feeder. The parameters to be adjusted, such as screw configurations, torque and throughput, can be selected in a flexible manner depending on the powder coating system employed and the powder coating properties to be adjusted, with the proviso that the shear forces acting downstream from the addition point of the effect pigment particles through the side feeder be kept correspondingly low. With respect to the commercially available extruder types tested, it has proven advantageous to arrange the side feeder for the addition of effect pigments in the rear half, preferably the rear third of the extruder. For reasons of clarity it should be noted that it is, of course, also possible to feed substances other than effect pigments to the powder coating (e. g. additives) via the one or more side feeders.

Other embodiments, which also enable the introduction of components, in particular effect pigments, into the melt phase without significant shear forces, are of course also conceivable in the sense of the present invention.

The method of preparing powder coatings according to the present invention has proven particularly advantageous for the substitution of prior art powder coatings which are classified as category C according to OFI (Austrian Research Institute for Chemistry and Technology) instruction sheet No. 44. In particular, these are powder coatings exhibiting a very distinctly visible sparkle effect. Notably, such an effect can be achieved by mixing aluminum effect pigments having a D50 of about 35 µm in the form of so-called silver dollars with a dark basic color. Said silver dollar pigments are made of a special aluminum grit and milled according to the respective size classification. In this manner, pigments are obtained that are characterized by their round to oval shape and a smooth surface. These pigments generally have a very high sparkling degree, i.e. the pigment exhibits a low scattering, but a strong reflection of light. The higher the contrast between the effect pigments (light, silver) and the basic color, the more difficult these effect coatings are in terms of manufacturing and handling by the end user.

When used for preparing a coating, the powder coatings according to the present invention behave similarly to single-colored powder coatings. Phenomena common in large components, such as clouds or banding, will not occur, nor will the typical brightening of edges in different profiles and sizes, which is caused by an accumulation of effect pigments at the edges. This constitutes a marked improvement over the prior art effect powder coatings.

Specific substrates to be coated with the powder coatings according to the present invention are, in particular, pre-treated and/or purified/degreased aluminum alloys or steel and its alloys. Other substrates, such as wood and MDF, are in principle also conceivable. In principle, the inventive powder coatings are not limited to any specific substrate as the compositions of effect powder coating A and/or basic powder coating may be adjusted accordingly.

Irrespectively of their chemical composition, the powder coatings according to the present invention are characterized in that effect pigments contained in the coating are surrounded at least in part by a transparent powder coating matrix and at least one channel formed from said transparent matrix leads from at least one effect pigment to the surface of the coating, at least 10 % of said channels having a maximal cross section as determined by electron microscopy of at least 150 µm, preferably at least 160 µm, more preferably at least 180 µm and especially preferably at least 200 µm.

According to a preferred embodiment of the present invention, at least 20 %, preferably at least 30 %, more preferably at least 35 % and most preferably at least 40 % of said channels have a maximum cross section of at least 150 µm, preferably at least 160 µm, more preferably at least 180 µm and especially preferably at least 200 µm.

It is also preferred if the channels having a maximal cross section as determined by electron microscopy of at least 150 µm contain on average at least 3, preferably at least 4, more preferably at least 5 effect pigments per channel.

The size of the channels can also be determined on the basis of a cross section of the substrate including the lacquer layer, which is then viewed with the electron microscope (SEM). From this, the number of channels per unit area can also be calculated.

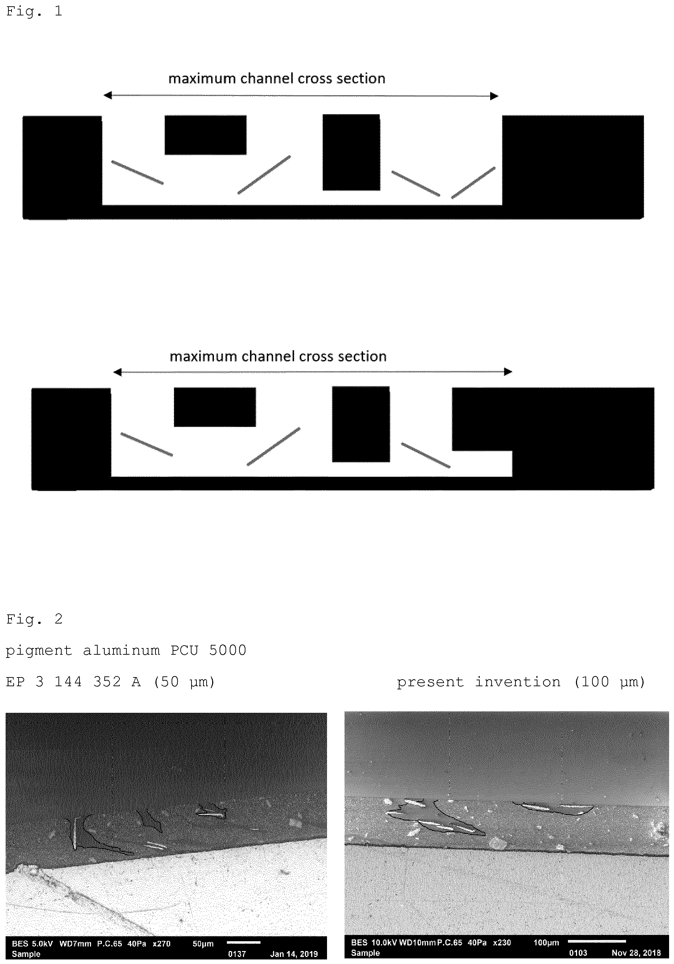

A channel in the finished coating layer is defined as a continuous area of transparent material surrounded by opaque material. Inclusions of opaque material within one and the same channel are possible, as long as the transparent cured powder coating is not completely interrupted. The channel width is defined as the maximum distance of transparent powder coating on the surface or within the coating within one and the same channel. Only channels which have a width of at least 20 microns and contain at least one effect pigment are considered. The above definitions are further explained by means of figure 1 in the enclosed drawings.

Furthermore, the powder coating according to the present invention may be characterized in that the sparkle intensity measured at measurement angles of 15°, 45° and 75° differs by at most 30% from the maximum value. Powder coating according to the present invention provides for an improved effect image better than the one according to the closest state-of-the-art, that is also substantially independent of the respective viewing angle. This independence of the viewing angle can be determined not only visually, but also by measurement. The samples were analyzed using the colorimeter "BYKmac" by BYK, Germany. Relevant in this context are the values SI (sparkle intensity) and SA (sparkle area), which are determined at three different measuring angles. Measurements were performed on a coating prepared with the powder coating according to the closest state-of-the-art (EP 3 144 352 A) and on a coating prepared with the powder coating according to the present invention. Despite a similar effect image, there is a significant difference when compared to the closest state-of-the-art, as can be seen in Table 1.

The measurement values show that the sparkle intensity measured on coatings produced with the powder coating according to the present invention is at all three measurement angles very high and even higher than on coatings produced according to closest state-of-the-art (EP 3 144 352 A). There is only a slight difference between the measured angles (max. 30 % below the maximum value).

Table 1 Comparing Sparkle Intesity SI of a coating made using a powder coating composition according to closest state-of-the-art (EP 3 144 352 A) with a coating made using a powder coating composition according to the present invention, both using LUXAN CFX 393D as effect pigment). The pigment load and powder coating compositions of the basic powder coatings B and the effect powder coatings A were chosen identically.

| | SI value | | |
|---|---|---|---|
| Measurement angle (between light source and measuring sensor) | 15° | 45° | 75° |
| EP 3 144 352 A | 132 | 50 | 50 |
| **Present invention** | **163** | **194** | **153** |

This effect is also discernible visually, as shown for instance in Figure 2 of the enclosed drawings. Here, one metal sheet coated using a powder coating composition according to closest state-of-the-art (EP 3 144 352 A) (left side) and another metal sheet coated with the powder coating according to the present invention (right side) were photographed through a microscope in a light box. For both coatings, the same amount of effect pigment particles (1 % by weight) was used.

According to the inventors' opinion - without being bound to a specific theory - the effect observed and also measured can be explained by the fact that while channels consisting of transparent powder coating are formed in both coating layers, those channels obtained with the powder coating according to the present invention, are broader than compared to the closest state-of-the-art, thus making it possible that also effect pigment particles buried deep within the coating can reflect light. Furthermore, due to the bigger size of the coarse milled particles consisting of effect pigment particles and effect powder coating A, such grains and consequently the channels formed therefrom can contain multiple effect pigment particles. This enables also more reflection of light between single effect pigment particles, which reflection also increases the sparkle intensity. This reflexion between different effect pigment particles in combination with the varying orientation of said pigments within the coating may also improve the independence of the effect appearance of the respective viewing angle. Also, not only the effect pigment particles located at the surface of the powder coating, but also a plurality of effect pigment particles located deep inside the powder coating can become visible to the observer. This effect creates, on the one hand, the above-mentioned independence of the viewing angle, and on the other hand an increased and enhanced visually perceptible 3D or depth effect of the powder coating according to the present invention. Photomicrographs of cross-section polishes of powder coating layers prepared with the powder coating according to the present invention substantiate the above theory of broader channel formation by employing coarser particles of a transparent powder coating matrix.

For a more detailed description, typical powder coating systems which can be used in the present invention are described hereafter. Further information can be found, for example, in Powder Coatings - Chemistry and Technology, 3rd edition, Emmanouil Spyrou.

### Powder Coatings:

Potential binding agents for use in the powder coatings according to the present invention include saturated and unsaturated systems. The latter may be cross-linked, *inter alia* radically by UV irradiation and/or by means of thermal initiators such as peroxides. In terms of quantity, the former are currently dominant in use. Among these binding agents, saturated polyesters play the most significant role. By way of example, carboxyl-functional polyester resins which have a functionality of 2 or higher are mentioned here. These can be cross-linked with organic compounds that are capable of reacting with the carboxyl groups of the polyester to produce a covalent bond and can optionally be mixed with conventional pigments, bulking agents and additives.

Since the 1970s, powder coatings based on carboxyl-functional polyester resins and the polyfunctional epoxy compound triglycidyl isocyanurate (= TGIC) have been recognized as the industry standard for the production of weather-resistant coatings for facade construction, automotive accessories, and general industrial applications.

Among others, possible alternatives to TGIC as curing agents for carboxyl-functional polyester resins are currently represented by β-hydroxyalkylamides such as PrimidR XL-552 (= bis[N,N'-di(β-hydroxyethyl)]adipamide) or PrimidR QM-1260 (= bis[N,N'-di-(β-hydroxypropyl)]adipamide), both available from EMS Chemie, Switzerland. A special feature of these curing agents is their, according to current knowledge, toxicological harmlessness.

Further possible alternatives to TGIC as curing agents for carboxyl-functional polyester resins are, for example, the glycidyl esters of aromatic or cycloaliphatic dicarboxylic acids; a suitable commercially available curing agent with an analogous chemical structure is, e. g., AralditR PT 910 (terephthalic acid triglycidyl ester/trimellitic acid triglycidyl ester, about 75:25) available from CIBA Spezialitätenchemie GmbH, Germany. The presence of the trifunctional trimellitic acid ester in AralditR PT 910 is to be considered as advantageous in comparison with pure diglycidyl esters with respect to the cross-linking density of baked coatings.

All the above-mentioned products are increasingly important in the formulation of powder coatings made from carboxyl-functional polyester resins, whereas TGIC is still able to prevail in numerous markets. Polyester resins for preparing weather-resistant powder coatings, which are cured by means of polyepoxides and/or β-hydroxyalkylamides, generally have an acid number in the range of 15 to 70 mg KOH/g polyester and a hydroxyl number of 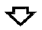 10 mg KOH/g polyester. They essentially consist of units of aromatic dicarboxylic acids, such as terephthalic acid and isophthalic acid, in addition to which minor amounts of aliphatic and/or cycloaliphatic dicarboxylic acids, such as adipic acid and/or cyclohexanedicarboxylic acid, are optionally used, and of aliphatic diols, particularly preferably branched, such as neopentyl glycol, in addition to minor amounts of linear and/or cycloaliphatic diols. The co-use of hydroxycarboxylic acids or functional derivatives thereof, such as their inner esters (= lactones), is also possible. Also known is the modification of such resins by the use of di- and trimeric fatty acids. Besides that, smaller amounts of tri- or higher functional and optionally monofunctional compounds may also be employed.

Other powder coatings known to the person skilled in the art, such as epoxy, hybrid, urethane and acrylate coatings, are mentioned here by way of example as further embodiments of the effect powder coatings according to the present invention.

### Effect pigments for powder coatings:

The size of the pigments (d₅₀ or mean value) depends on the desired effect and can vary between 3 µm and 200 µm, preferably between 20 µm and 130 µm and more preferably between 35 µm and 90 µm. The weight proportion of the effect pigments in relation to the total weight of effect powder coating A can amount to between 1 % and 40 % by weight, in particular between 2 % and 20 % by weight and further in particular between 5 % and 15 % by weight.

As effect pigments according to the present invention, preferably three types of pigments are used, namely aluminum pigments), mica pigments and glass flakes (e.g. Luxan pigments manufactured by Eckard GmbH in Hartenstein, Germany). Brass and copper pigments may also be used. According to particularly preferred embodiment of the invention, glass flakes are used as effect pigments. However, the present invention is in no way limited to the above mentioned effect pigments.

Effect pigments are subdivided into metallic-effect pigments and special-effect pigments.

Metallic-effect pigments are based on platelets made of metal, especially aluminum. Light is reflected by the metallic surface, which is perceived by the observer as a metallic effect.

Important metallic-effect pigments are aluminum, brass and copper platelets.

Pearlescent pigments and interference pigments are summarized under the term special-effect pigments. Pearlescent pigments are effect pigments consisting of transparent platelets having a high refractive index. They produce a pearl-like effect by multiple reflection. Interference pigments are effect pigments whose coloring effect is based entirely or predominantly on interference. Interference pigments can be based on transparent or non-transparent platelets. Most commonly used in the industry are mica pigments coated with metal oxide, which are classified as pearlescent or interference pigments according to type and thickness of coating. The most important interference pigments are platelet-shaped titanium dioxide, platelet-shaped organic pigments, metal oxide mica pigments, aluminum oxide flakes, Ca/Al borosilicate flakes, silica flakes, metal flakes coated with metal oxide or multilayer pigments. Many of these pigments are additionally coated with metal oxides (e. g. titanium dioxide). The color effect can be influenced by the thickness of the oxide coating. Exemplary commercial names are Iriodin®, Miraval® or Colorstream®.

Pigments based on natural mica are generally produced from naturally occurring muscovite mica by means of grinding, fractionating, cleaning and re-coating, drying and calcination.

The effect of the pigments is based on the principle of regular reflection in the case of metallic-effect pigments and on regular reflection and interference in the case of pearlescent pigments.

All effect pigments have in common that their effect is highly dependent on the viewing angle. In visual comparisons, this is simulated by tilting the viewed sample. A color measurement is thus only reasonable with multi-angle measuring devices.

In a preferred embodiment of the present invention it is provided that the average diameter of the effect pigment particles dispersed in the powder coating according to the present invention amounts to at least 90 % of the average diameter of the original effect pigment particles. Depending on the type, the effect pigments (usually present in the form of pigment platelets) usually have a diameter of about 3 to 100 µm while the thickness of each plate is less than 5 µm. The platelets may consist of one or more layers. The carrier material can be crystalline (e. g. mica) or amorphous (glass or silica platelets). In order to achieve a good effect image, the particles must have the highest possible surface smoothness and are supposed to align in the respective application.

Metallic-effect pigments are further subdivided into leafing or non-leafing pigments.

As a result of special surface treatments, leafing pigments orient themselves to the surface in the cured film, thereby generating a strong metallic sheen. This effect is not scratch- or smear-proof, however, due to which in most cases an overcoat with a protective clear coating is required.

Non-leafing pigments will distribute evenly in the film matrix upon application, wherein only a portion of the pigments will be oriented to the surface, which constitutes protection against abrasion and chemical attacks. Their effect, however, is less brilliant and metallic than the effect obtained with leafing pigments.

The present invention will be explained in greater detail by the following Examples and Figures, without being limited thereto, however.

### Figures

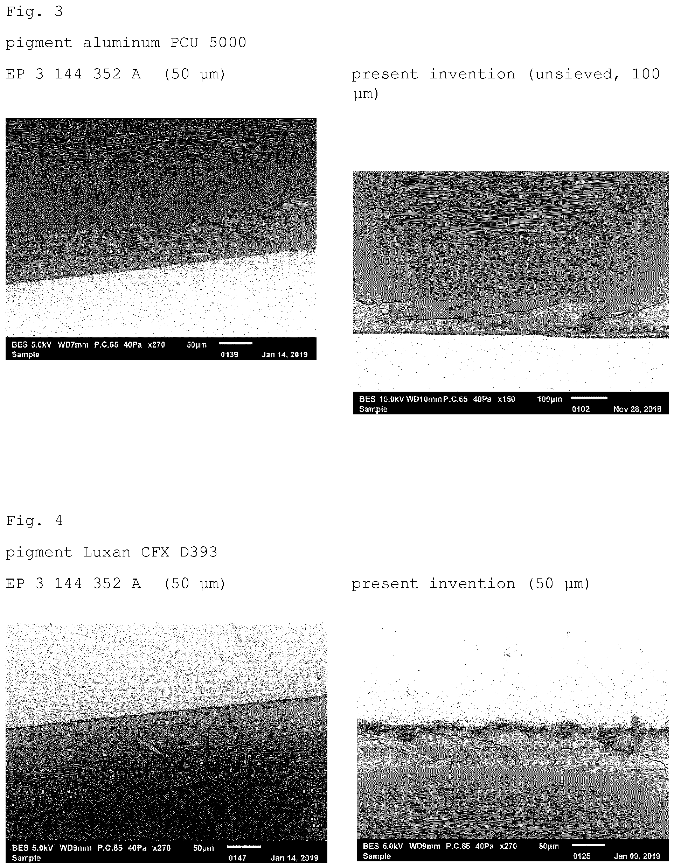

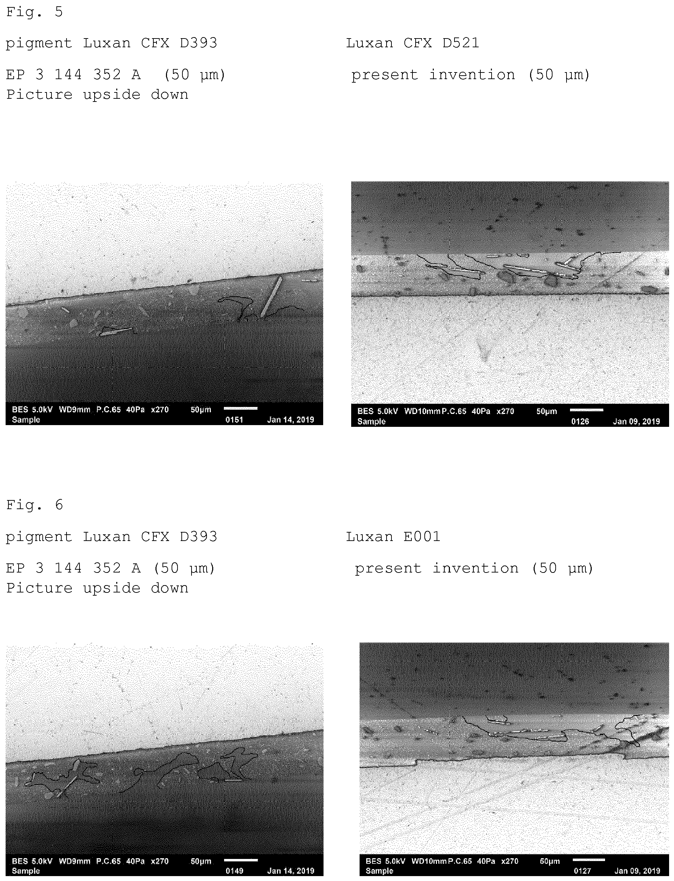

Images of cross-section polishes are shown in Figures 2 to 6, each in comparison with an example according to the closest state-of-the-art. The black lined areas without any visible particles (such as bulking agents or color pigments) consist of the above-mentioned transparent powder coating matrix. These channels can extend up to 80 µm deep into the powder coating layer and render visible even those pigment particles that are embedded deep inside the powder coating layer (in these photographs, the effect pigment particles appear as bright areas due to illumination). The light areas are cross-sections through the substrate. The pictures itself are deemed to be self-explanatory, in each picture a substantial increase of the channel size can be seen, it is also evident that each channel of the coating according to the present invention contains more effect pigments when directly compared to a coating according to the closest state-of-the-art.

### Examples

The present invention will now be described in greater detail in the following Examples, without being limited thereto, however.

The powder coating according to the present invention can, for example, consist of two components, wherein one component is the transparent effect powder coating A and the other component is an opaque colored basic powder coating B.

### Example 1:

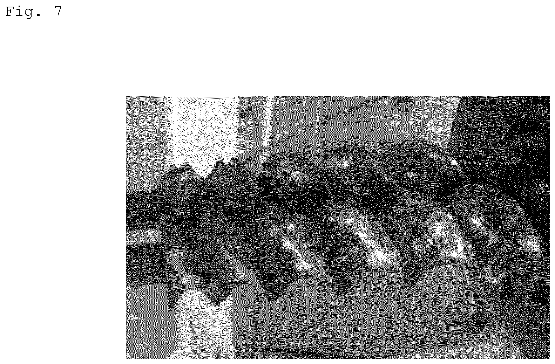

A transparent and colorless powder coating was prepared from 900 parts of Crylcoat® 4642-3 or an equivalent polyester, 47 parts of Primid® XL-552, 5 parts of Richfos® 626, 3 parts of benzoin, 5 parts of Worlee® Add 902, 5 parts of Licowax C Micropowder PM and 2 parts of Tinuvin®. By means of gravimetric feeding, this premix is metered into a twin-screw extruder (e. g. ZSK 27), molten with a screw configuration that is suitable for powder coating production and then dispersed. Such configurations are known to the person skilled in the art. In the last third of the process section of the extruder, 50 parts of effect pigment (e.g.: aluminum powder PCU 5000 or LUXAN CFX 393D) are added by means of a twin-shaft side feeder and gravimetric feeding. The screw configuration downstream from the side feeder is exemplarily shown in Fig. 7. The temperatures inside the extruder was kept at less than 120 °C. Next, the liquid extrudate is cold-rolled and crushed in an impact pin mill in order to obtain ground powder coating, which optionally can be sieved (all percentages in % by weight):

| X | unsieved | | sieved 212 µm | |
|---|---|---|---|---|
| 125 µm | 25,88 | 13,1% | 14,75 | 7,5% |
| 112 µm | 19,66 | 9,9% | 21,57 | 10,9% |
| 100 µm | 36,89 | 18,6% | 34,45 | 17,5% |
| 90 µm | 39,56 | 20,0% | 41,95 | 21,3% |
| sieve bottom (< 90 µm) | 75,9 | 38,4% | 84,35 | 42,8% |
| sum | 197,89 | | 197,07 | |

Thus, the following particle sizes could be obtained from the impact mill used for grinding the extrudate.

| diameter d in % | particle size in µm | |
|---|---|---|
| | sieved 212 µm | unsieved |
| 10% | 17 | 20 |
| 50% | 71 | 91 |
| 90% | 181 | 344 |

The opaque, colored basic powder coating B was essentially prepared in the same manner as described above and, in addition to the above raw materials, also contains color pigments and bulking agents, but no metallic/effect pigments. The basic powder coating B may also contain effect pigments. The basic powder coating B is milled less coarsely than the effect powder coating A.

The following mixture was used as basic powder coating B: 680 parts of CRYLCOAT® 4655-2, 36 parts of Primid® XL-552, 5 parts of Worlee® Add 902, 8 parts of Lanco Wax TF 1890, 18 parts of Powder Add 9083, 2 parts of Pigment Red 101, 10 parts of Pigment Brown 24, 7 parts of Pigment Black 7, 24 parts of titanium TS-6200 and 210 parts of Portaryte B 15.

Subsequently, the two milled components (effect powder coating A and colored, opaque basic powder coating B) were mixed in a ratio of 20 to 80 by means of dry blending. The mixing was conducted in either a dry blend mixer or a bonding mixer.

Powder coatings on suitable substrates were made using the described coating composition. The coating was applied by conventional methods (e.g.: corona or tribo spray guns) under conditions well-known to a person skilled in the art. The curing conditions depend strongly on the chemistry of the coating compositions and can be easily adjusted by a person skilled in the art. For the given example the coating was cured for 10 minutes at 200 °C in a conventional convection oven.

Fig. 7 shows an extruder screw which is fitted with mixing elements downstream from the point of addition via side feeder.

## Claims

1. Powder coating composition comprising at least one opaque basic powder coating B and at least one effect powder coating A comprising effect pigment particles, **characterized in that** the effect pigment particles present in the effect powder coating A are, at least partially, coated with a transparent curable powder coating matrix and wherein the effect powder coating A is ground so that less than 70 % by weight, preferably less than 60 % by weight, more preferably less than 50 % by weight, and most preferably less than 40 % by weight, of the effect powder coating A have a grain size of below 90 µm, as measured by sieve analysis.

2. Powder coating composition according to claim 1, **characterized in that** at least 20 % by weight, preferably at least 25 % by weight, more preferably at least 30 % by weight, even more preferably at least 35 % by weight and most preferably at least 40 % by weight, of the effect powder coating A are ground to a grain size of more than 100 µm.

3. Powder coating composition according to any of the preceding claims, **characterized in that** at least 5 % by weight, preferably at least 7 % by weight, more preferably at least 10 % by weight, and most preferably at least 15 % by weight of the effect powder coating A are ground to a grain size of more than 125 µm.

4. Powder coating composition according to any of the preceding claims, **characterized in that** at least 3 % by weight of the effect powder coating A, preferably at least 5 % by weight are ground to a grain size of more than 212 µm.

5. Powder coating composition according to any of the preceding claims, **characterized in that** it comprises 5 to 40 % by weight effect powder coating A, preferably 5 to 30 % by weight, more preferably 10 to 20 % by weight, based on the total powder coating composition.

6. Method for preparing the powder coating according to any of the preceding claims, **characterized in that** the transparent powder coating is melted and at least one effect pigment is stirred into or extruded with the melt, the effect powder coating A, obtained from said powder coating melt after cooling and grounding to the required grain size as measured by sieve analysis, then being mixed with a base powder coating B.

7. Method according to claim 6, **characterized in that** the at least one effect pigment is added to the transparent curable powder coating melt by at least one side feeder during an extrusion process.

8. Effect coating, **characterized in that** effect pigments contained in the coating are surrounded at least in part by a transparent powder coating matrix and at least one channel formed from said transparent matrix leads from at least one effect pigment to the surface of the coating, at least 10 % by weight of said channels having a maximal cross section as determined by electron microscopy of at least 150 µm, preferably at least 160 µm, more preferably at least 180 µm and especially preferably at least 200 µm.

9. Powder coating according to claim 8, **characterized in that** at least 20 %, preferably at least 30 %, more preferably at least 35 % and most preferably at least 40 % of said channels have a maximum cross section of at least 150 µm, preferably at least 160 µm, more preferably at least 180 µm and especially preferably at least 200 µm.

10. Powder coating according to claim 8 or 9, **characterized in that** the channels having a maximal cross section as determined by electron microscopy of at least 150 µm contain on average at least 3, preferably at least 4, more preferably at least 5 effect pigments per channel.

11. Powder coating according to any of claims 8 to 10, **characterized in that** the sparkle intensity measured at measurement angles of 15°, 45° and 75° differs by at most 30% from the maximum value.
